# EUROPÄISCHE PATENTSCHRIFT

(11) **EP 1 358 536 B1**
(45) Veröffentlichungstag und Bekanntmachung des Hinweises auf die Patenterteilung: **30.04.2008**
(21) Anmeldenummer: 02710664.0
(22) Anmeldetag: 05.02.2002
(51) Int. Cl.: G06F 1/16, H04N 1/00

(54) **VORRICHTUNG ZUM DIGITALEN ABBILDEN UND SPEICHERN EINES DOKUMENTES**
DEVICE FOR DIGITAL IMAGING AND STORAGE OF A DOCUMENT
DISPOSITIF DE REPRODUCTION ET D'ENREGISTREMENT NUMERIQUES D'UN DOCUMENT

(30) Priorität: 07.02.2001 AT 1902001
(43) Veröffentlichungstag der Anmeldung: 05.11.2003
(73) Patentinhaber: Höfler, Kurt, A-4020 Linz (AT)
(72) Erfinder: Höfler, Kurt, A-4020 Linz (AT)
(74) Vertreter: Hübscher, Helmut
(86) Internationale Anmeldenummer: PCT/AT2002/000041
(87) Internationale Veröffentlichungsnummer: WO 2002/063445

(56) Entgegenhaltungen:
- WO-A-00/54129
- US-A- 5 442 512
- US-A- 5 948 086
- US-A- 6 078 407

## Beschreibung

### Technisches Gebiet

Die Erfindung bezieht sich auf eine Vorrichtung zum digitalen Abbilden und Speichern eines Dokumentes mit einer digitalen Bilderfassungseinrichtung und mit einer an die digitale Bilderfassungseinrichtung anschließbaren, durch einen Rechner gebildeten Auswerteschaltung für die in einem Speicher ablegbare digitale Abbildung.

### Stand der Technik

Zur digitalen Abbildung von Dokumenten werden üblicherweise digitale Bilderfassungseinrichtungen in Form von Scannern eingesetzt, über die die erfaßten digitalen Bildpunkte der Abbildungen abgespeichert werden, um die daraus erhaltenen digitalen Bilddateien mit Hilfe entsprechender Programme unter Einsatz von Rechnern zu verwalten. Über durch die Rechner gebildete Auswerteschaltungen lassen sich die abgespeicherten Bilddateien den jeweiligen Anforderungen entsprechend bearbeiten und ausdrucken. Der mit diesen bekannten Scannern verbundene Aufwand für die digitale Abbildung und Speicherung von Dokumenten macht solche üblicherweise stationären Einrichtungen jedoch für den mobilen Einsatz ungeeignet. Außerdem können diese bekannten Scanner nur dann wirtschaftlich eingesetzt werden, wenn die abzubildenden Dokumente stapelweise vorgelegt werden können.

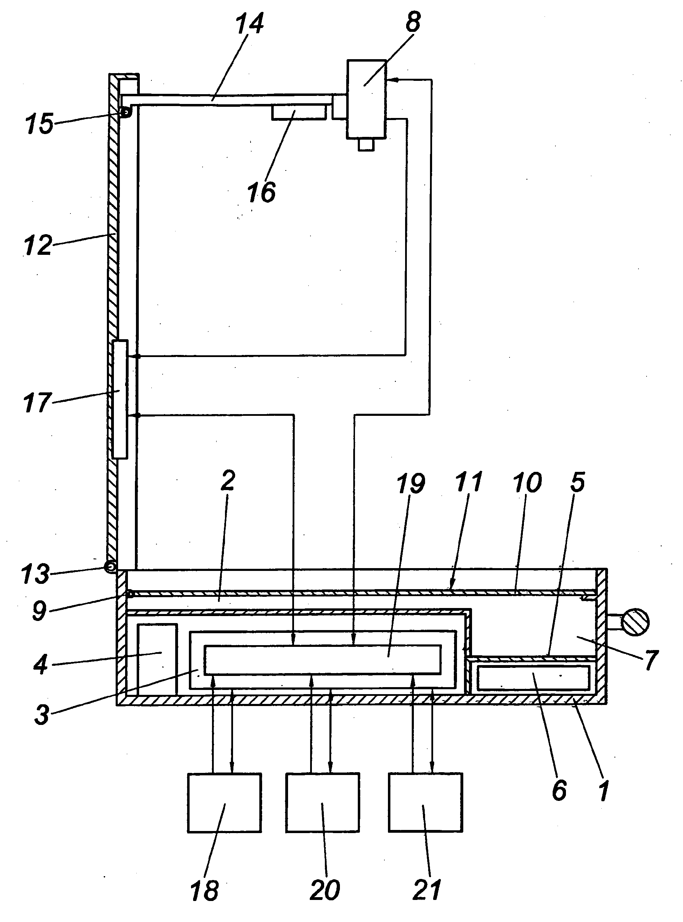

Um in einem Zustelldienst für Pakete aufgrund mangelnder Angaben über die Zustelladresse nicht zustellbare und daher abgelegte Pakete einfach identifizieren zu können, ist es bekannt (WO 98/22 888 A1), von diesen Paketen ein digitales Bild abzuspeichern, das mit Hilfe einer Digitalkamera erstellt wird. Über eine Auswerteschaltung werden aus der digitalen Abbildung Kenndaten, beispielsweise eine überwiegende Farbe oder die bei einem vorgegebenen Abbildungsmaßstab aus der Abbildung entnehmbare Paketgröße, ermittelt und zur Vereinfachung der Suche nach einem bestimmten Paket gesondert gespeichert. Diese bekannte Bilderfassungseinrichtung ist jedoch nicht zum digitalen Abbilden und Speichern von Dokumenten geeignet, deren Inhalt möglichst ohne Informationsverlust mit einem vergleichsweise geringen Speicherbedarf wirtschaftlich erfaßt werden soll. Verschiedene Kombinationen von mobilen Rechnern und digitalen Kameras bzw. einer Bilderfassungseinrichtung sind aus den Dokumenten WO-A-00/54129; US-A-5 948 086; US-A-6 078 407 und US-A-5 442 512 bekannt.

### Darstellung der Erfindung

Der Erfindung liegt somit die Aufgabe zugrunde, eine Vorrichtung zum digitalen Abbilden und Speichern von Dokumenten so auszugestalten, daß eine wirtschaftliche Erfassung und Abspeicherung der erfaßten Dokumente vor Ort möglich wird, und zwar unter der Voraussetzung einer möglichst einfachen Handhabung.

Die Erfindung löst die gestellte Aufgabe dadurch, daß die digitale Bilderfassungseinrichtung aus einer Digitalkamera besteht, daß aus der abgespeicherten digitalen Abbildung über die Auswerteschaltung zwei digitale Bilddateien einerseits für Farbbilder mit geringer Auflösung und anderseits für monochrome Bilder in einer Zweitondarstellung mit einer hohen Auflösung ableitbar und in Speichereinheiten einlesbar sind, daß für den Rechner, dessen Eingabeeinrichtung und die Digitalkamera ein tragbarer, kofferartiger Behälter vorgesehen ist, dessen geöffneter Deckel einen Ständer für einen Ausleger zur Aufnahme der Digitalkamera bildet, und daß der Behälter eine öffenbare Abdeckung für den Kofferraum als Auflage für das abzubildende Dokument aufweist.

Durch das Vorsehen einer handelsüblichen Digitalkamera, die allerdings eine entsprechend hohe Auflösung der digitalen Abbildung sicherstellen muß, können aufgrund der gleichzeitigen Erfassung aller Bildpunkte im Vergleich zur zeilenweisen Bildpunktabtastung üblicher Scanner geringe Aufnahmezeiten für die Dokumentabbildung sichergestellt werden. Außerdem ist die Abbildung durch die Digitalkamera nicht auf zweidimensionale Dokumente beschränkt. Da zusätzlich aus der digitalen Abbildung eines Dokumentes über die Auswerteschaltung zwei digitale Bilddateien abgeleitet werden, die einerseits ein Farbbild mit geringer Auflösung und anderseits ein monochromes Bild in einer Zweitondarstellung mit einer hohen Auflösung ergeben, kann die unter Umständen große Datenmenge der digitalen Abbildung eines Dokumentes erheblich verringert werden, ohne einen ins Gewicht fallenden Informationsverlust befürchten zu müssen. Die monochrome Zweitondarstellung entspricht der üblichen Schwarz-Weiß-Analogkopie eines Dokumentes und bringt aufgrund der hohen Auflösung eine für die Nachbearbeitung beispielsweise durch eine Schrifterkennung ausreichende Abbildungsgenauigkeit mit sich. Da solche monochrome Zweitondarstellungen jedoch bei farbigen Dokumenten oder unterschiedlichen Grautönen einen Verlust an Bildinformationen bedingen, wird dieser Informationsverlust weitgehend durch die Bilddatei für die Farbwiedergabe ausgeglichen, die keiner hohen Auflösung bedarf, weil es vor allem darum geht, diese Farbdarstellung des abgebildeten Dokumentes auf einem Bildschirm anzuzeigen, um beispielsweise einen mit einer Farbmarkierung unterlegten Schriftzug lesen zu können. Damit kann die Größe der beiden Bilddateien im Vergleich zu der von der Digitalkamera erfaßten digitalen Abbildung eines Dokumentes klein gehalten werden, ohne auf die wesentlichen Bildinformationen verzichten zu müssen. Mit einer üblichen Komprimierung der Bilddatein lassen sich somit die vorhandenen Speicher vorteilhaft für das Einspeichern einer Vielzahl von Dokumenten ausnützen, wobei aufgrund der verwendeten üblichen Dateiformate die abgespeicherten Bilddateien vorteilhaft mit herkömmlichen Programmen verwaltet werden können.

Der Einsatz einer handelsüblichen digitalen Kamera bringt darüber hinaus eine wesentliche Voraussetzung für den mobilen Einsatz solcher Vorrichtungen mit sich, weil diese Vorrichtungen in einem tragbaren, kofferartigen Behälter zusammengefaßt werden können. Zu diesem Zweck bildet der geöffnete Deckel des Behälters einen Ständer für einen Ausleger zur Aufnahme der Digitalkamera, wobei eine öffenbare Abdeckung für den Kofferraum des Behälters eine Auflage für das abzubildende Dokument bildet. Der im Kofferraum gehaltene Rechner braucht lediglich über ein entsprechendes Steuer- und Datenübertragungskabel mit der Digitalkamera verbunden zu werden, um mit der digitalen Abbildung eines auf die Abdeckung des Kofferraumes aufgelegten Dokumentes beginnen zu können. Selbstverständlich ist im kofferartigen Behälter für eine entsprechende, aufladbare Stromquelle zu sorgen, um sowohl den Rechner als auch die Digitalkamera mit Energie versorgen zu können. Die für die Steuerung des Rechners bzw. der Digitalkamera vorgesehene Eingabeeinrichtung des Rechners kann wie die Digitalkamera im Kofferraum für den Transport verstaut werden.

Besonders einfache Bedienungsverhältnisse ergeben sich, wenn der Deckel einen einerseits über die Digitalkamera und anderseits über den Rechner ansteuerbaren Bildschirm trägt, so daß der Bildschirm einerseits das von der Digitalkamera erfaßte Abbild des Dokumentes wiedergibt und anderseits eine Bedienung des Rechners über eine herkömmliche Bildschirmanzeige erlaubt. Die Umstellung der Bildschirmansteuerung kann vorteilhaft über die Eingabeeinrichtung des Rechners erfolgen.

Obwohl der Ausleger zur Aufnahme der Digitalkamera abnehmbar im Deckel des Behälters angeordnet sein kann, ergeben sich besonders einfache Konstruktionsverhältnisse, wenn der Ausleger ausschwenkbar im Deckel des Behälters gelagert ist, zumal in einem solchen Fall beispielsweise die Energieversorgung für die Digitalkamera durch ein im Ausleger angeordnetes Kabel sichergestellt werden kann.

Da im allgemeinen die äußeren Beleuchtungsverhältnisse nicht für eine gute Ausleuchtung des abzubildenden Dokumentes ausreichen, empfiehlt es sich, den Ausleger oder den Deckel mit einer gegen die Auflage für das Dokument gerichteten Beleuchtungseinrichtung, vorzugsweise einer Blitzeinrichtung, zu versehen. Die Energieversorgung dieser Beleuchtungseinrichtung kann wieder von der im Kofferraum vorgesehenen Stromquelle her erfolgen.

### Kurze Beschreibung der Zeichnung

In der Zeichnung ist der Erfindungsgegenstand beispielsweise dargestellt, und zwar wird eine erfindungsgemäße Vorrichtung zum digitalen Abbilden und Speichern eines Dokumentes in einem schematischen Blockschaltbild gezeigt.

### Weg zur Ausführung der Erfindung

Gemäß dem dargestellten Ausführungsbeispiel weist die Vorrichtung zum digitalen Abbilden und Speichern eines Dokumentes einen tragbaren, kofferartigen Behälter 1 auf, in dessen Kofferraum 2 ein Rechner 3 mit einer Stromquelle 4 in Form eines aufladbaren Akkumulators mit einem Netzgerät gehalten sind. Der Behälter 1 weist außerdem ein Ausziehfach 5 für eine Eingabeeinrichtung 6 des Rechners 3 auf, wobei vorteilhaft eine Folientastatur eingesetzt werden kann. Der Kofferraum 2, der eine Aufnahme 7 für eine Digitalkamera 8 bildet, kann durch eine um eine Achse 9 verschwenkbare Abdekkung 10 verschlossen werden, um für ein abzubildendes Dokument eine Auflage 11 zu erhalten. Der Deckel 12, dessen Scharniergelenk mit 13 bezeichnet ist, bildet in einer verriegelten Offenstellung einen Ständer für einen Ausleger 14 zur Aufnahme der digitalen Kamera 8. Dieser um eine Achse 15 ausschwenkbare und in der ausgeschwenkten Stellung verriegelbare Ausleger 14 bildet mit dem geöffneten Deckel 12 des Behälters 1 ein Kamerastativ, das die Digitalkamera 8 in einer zur Auflage 11 senkrechten Aufnahmestellung hält, so daß für die Erfassung eines Dokumentes auf der Auflage 11 besonders günstige Aufnahmebedingungen gewährleistet werden. Da der Ausleger 14 zusätzlich mit einer Beleuchtungseinrichtung 16, beispielsweise einen Ringblitz, versehen ist, wird zusätzlich für eine von den äußeren Lichtverhältnissen unabhängige Ausleuchtung des abzubildenden Dokumentes gesorgt. Die Digitalkamera 8 und die Beleuchtungseinrichtung 16 sind wie der Rechner 3 an die Stromquelle 4 angeschlossen.

Im Bereich des Deckels 12 ist ein Bildschirm 17 vorgesehen, der einerseits vom Rechner 3 und anderseits über die Digitalkamera 8 angesteuert wird. Der Rechner 3 kann daher über die Eingabeeinrichtung 6 in herkömmlicher Weise mit Hilfe des Bildschirms 17 bedient werden. Wird die Bildschirmsteuerung über die Eingabeeinrichtung 6 auf die Digitalkamera 8 umgeschaltet, so wird das von der Digitalkamera 8 erfaßte Abbild des aufzunehmenden Dokumentes mit einer entsprechend geringen Auflösung angezeigt. Der Bildschirm 17 kann daher als Sucher für die Digitalkamera 8 verwendet werden. Das bei einer Aufnahme durch die fernbediente Digitalkamera 8 erfaßte, digitale Farbbild wird in den Rechner 3 übertragen und dort in einem Speicher 18 abgelegt. Dabei kann die Datenübertragung über einen der Digitalkamera 8 zugehörigen Datenträger oder unmittelbar erfolgen.

Die im Speicher 18 abgelegte digitale Abbildung des aufgenommenen Dokumentes wird nach einer Befehlseingabe über die Eingabeeinrichtung 6 in einer Auswerteschaltung 19 des Rechners 3 in zwei Bilddateien umgewandelt, die in Speichereinheiten 20 und 21 abgelegt werden. Diese Bilddateien stellen je eine Auswahl der von der Digitalkamera 8 erfaßten Abbildungsdaten dar. Während die eine digitale Bilddatei eine Farbdarstellung des erfaßten digitalen Abbildes in einer groben Auflösung enthält, umfaßt die andere der beiden digitalen Bilddateien eine monochrome Zweitonabbildung mit hoher Auflösung. Bildinformationen, die in der monochromen Bilddatei verloren gegangen sind, können daher ergänzend über die Bilddatei für die farbige Abbildung abgefragt werden. Da für den Ausdruck des abgebildeten Dokumentes die in der Speichereinheit 21 abgelegte, monochrome Bilddatei herangezogen wird, kann wegen der erheblich verringerten Datenmenge ein monochromes Abbild des Dokumentes ausreichender Qualität für den Druck bzw. die Weiterverarbeitung zur Verfügung gestellt werden, vergleichbar einer üblichen Schwarz-Weiß-Analogkopie. Sind trotz der hohen Auflösung der monochromen Bilddatei aufgrund der fehlenden Farbinformationen bzw. fehlender Grauwerte bestimmte Bildbereiche nicht ausreichend lesbar, so kann zusätzlich die Farbabbildung aus der Speichereinheit 20 auf einen Bildschirm ausgegeben werden, der trotz der geringen Auflösung der Farbabbildung die fehlenden Informationen mit einer ausreichenden Genauigkeit wiedergibt, zumal ja Bildschirme von vornherein eine geringere Auflösung bedingen. Es braucht wohl nicht besonders hervorgehoben zu werden, daß der Rechner 3 auch als herkömmlicher Rechner eingesetzt werden kann, wobei ein Datenaustausch mit anderen Rechnern über geeignete Schnittstellen ohne weiteres möglich ist.

Nach der Auswertung der von der Digitalkamera 8 erfaßten digitalen Abbildung eines Dokumentes kann der Speicher 18 für diese digitale Abbildung gelöscht werden, weil die von der digitalen Abbildung abgeleiteten, in den Speichereinheiten 20 und 21 abgelegten digitalen Bilddateien eine ausreichende Information über das abgebildete Dokument enthalten.

Da der Speicher 18 bzw. die Speichereinheiten 20 und 21 Verzeichnissen auf der Festplatte des Rechners 3 entsprechen, können die in diesen Verzeichnissen abgelegten Bilddateien wie andere Dateien verwaltet werden, insbesondere wenn diese Dateien ein Standardformat aufweisen, was ohne weiteres möglich ist. Damit eröffnen sich vielfältige Möglichkeiten, die in der beschriebenen Art und Weise digital erfaßten Dokumente zusammenzufassen und zu ordnen, um sie mit geeigneten Suchfunktionen wieder rasch aufzufinden. Die Verwaltung der digital erfaßten Dokumente kann selbstverständlich erst außerhalb des Rechners 3 erfolgen, wobei Grunddaten für die Einordnung in spätere Datenbanken bereits beim erfassen der Dokumente über die digitale Kamera 8 vorgegeben werden können.

## Patentansprüche

1. Vorrichtung zum digitalen Abbilden und Speichern eines Dokumentes mit einer digitalen Bilderfassungseinrichtung und mit einer an die digitale Bilderfassungseinrichtung anschließbaren, durch einen Rechner (3) gebildeten Auswerteschaltung (19) für die in einem Speicher (18) ablegbare digitale Abbildung, **dadurch gekennzeichnet, daß** die digitale Bilderfassungseinrichtung aus einer Digitalkamera (8) besteht, daß aus der abgespeicherten digitalen Abbildung über die Auswerteschaltung (19) zwei digitale Bilddateien einerseits für Farbbilder mit geringer Auflösung und anderseits für monochrome Bilder in einer Zweitondarstellung mit einer hohen Auflösung ableitbar und in Speichereinheiten (20, 21) einlesbar sind, daß für den Rechner (3), dessen Eingabeeinrichtung (6) und die Digitalkamera (8) ein tragbarer, kofferartiger Behälter (1) vorgesehen ist, dessen geöffneter Deckel (12) einen Ständer für einen Ausleger (14) zur Aufnahme der Digitalkamera (8) bildet, und daß der Behälter (1) eine öffenbare Abdeckung (10) für den Kofferraum (2) als Auflage (11) für das abzubildende Dokument aufweist.

2. Vorrichtung nach Anspruch 1, **dadurch gekennzeichnet, daß** der Deckel (12) einen einerseits über die Digitalkamera (8) und anderseits über den Rechner (3) ansteuerbaren Bildschirm (17) trägt.

3. Vorrichtung nach Anspruch 1 oder 2, **dadurch gekennzeichnet, daß** der Ausleger (14) zur Aufnahme der Digitalkamera (8) ausschwenkbar im Deckel (12) des Behälters (1) gelagert ist.

4. Vorrichtung nach einem der Ansprüche 1 bis 3, **dadurch gekennzeichnet, daß** der Ausleger (14) oder der Deckel (12) eine gegen die Auflage (11) für das Dokument gerichtete Beleuchtungseinrichtung (16), vorzugsweise eine Blitzeinrichtung, aufweist.

## Claims

1. Device for digitally imaging and storing a document, having a digital image detecting unit and having an evaluation circuit (19) for the digital image which can be stored in a memory (18), which circuit is formed by a computer (3) and can be connected to the digital image detecting unit, **characterised in that** the digital image detecting unit consists of a digital camera (8), **in that** two image files can be derived from the stored digital image via the evaluation circuit (19) and can be read in memory units (20, 21), the image files being on the one hand for colour images having a low resolution and on the other hand for two-tone monochrome images having a high resolution, **in that** a hand-held, case-like container (1) is provided for the computer (3), its input unit (6) and the digital camera (8), the open lid (12) of the container forming a support for an arm (14) for receiving the digital camera (8), and **in that** the container (1) comprises a cover (10), which can be opened, for the case space (2) as a support plate (11) for the document to be imaged.

2. Device as claimed in Claim 1, **characterised in that** the lid (12) supports a display screen (17) which can be controlled on the one hand via the digital camera (8) and on the other hand via the computer (3).

3. Device as claimed in Claim 1 or 2, **characterised in that** the arm (14) for receiving the digital camera (8) is mounted in the lid (12) of the container (1) so as to be able to swivel out.

4. Device as claimed in any one of Claims 1 to 3, **characterised in that** the arm (14) or the lid (12) comprises an illumination unit (16), preferably a flash unit, directed towards the support plate (11) for the document.

## Revendications

1. Dispositif de reproduction et d'enregistrement numériques d'un document, avec un dispositif de détection d'image numérique, et avec un circuit d'évaluation (19), susceptible d'être raccordé au dispositif de détection d'image numérique, formé par un ordinateur (3), pour la reproduction numérique susceptible d'être placée dans une mémoire (18), **caractérisé en ce que** le dispositif de détection d'image numérique est composé d'une caméra numérique (8), **en ce que**, à partir de la reproduction numérique mémorisée, par l'intermédiaire du circuit d'évaluation (19), deux fichiers image numériques, d'une part, pour des images en couleur à faible résolution et, d'autre part, pour des images monochromes dans une présentation en deux teintes à haute résolution peuvent être dérivées et peuvent être enregistrées dans des unités mémoire (20, 21), **en ce que**, pour l'ordinateur (3), son dispositif d'introduction (6) et la caméra numérique (8), est prévu un récipient (1) du genre d'un coffre portatif, dont le couvercle (12) ouvert forme un pied support pour un bras articulé (14) pour supporter la caméra numérique (8), et **en ce que** le récipient (1) présente un recouvrement (10) susceptible d'être ouvert pour l'espace de coffre (2) en tant que reposoir (11) pour le document à reproduire.

2. Dispositif selon la revendication 1, **caractérisé en ce que** couvercle (12) porte un écran image (17), pouvant être commandé, d'une part, par l'intermédiaire de la caméra numérique (8) et, d'autre part, par l'intermédiaire de l'ordinateur (3).

3. Dispositif selon la revendication 1 ou 2, **caractérisé en ce que** le bras articulé (14) est monté de façon à pouvoir pivoter dans le couvercle (12) du récipient (1) pour supporter la caméra numérique (8).

4. Dispositif selon l'une des revendications précédentes, **caractérisé en ce que** le bras articulé (14) ou le couvercle (12) présente un dispositif d'éclairage (16), de préférence un dispositif de production d'éclairs lumineux, tourné vers le reposoir (11) pour le document.
